# EUROPEAN PATENT APPLICATION

(11) **EP 4 786 272 A1**
(43) Date of publication of application: **05.08.2026**
(21) Application number: 25220330.2
(22) Date of filing: 03.12.2025
(51) Int. Cl.: B60N 2/66, A61H 9/00, B60N 2/90, F16K 15/14, F16K 7/07

(54) **INTEGRATED SHUTOFF VALVE**

(30) Priority: 04.02.2025 US 202519045147
(71) Applicant: Lear Corporation, Southfield, MI 48033 (US)
(72) Inventor: Blair, Samuel, Rochester, MI, 48306 (US); Morris, Matthew, Rochester Hills, MI, 48306 (US); Abdella, David J., Farmington Hills, MI, 48336 (US)
(74) Representative: Grünecker Patent- und Rechtsanwälte PartG mbB

(57) **Abstract**

An assembly includes a valve including a first layer and a second layer joined to form a passage and a cavity adjacent the passage. The cavity includes a concave portion concave relative to the passage.

## Description

### BACKGROUND

Seats may include bladders that are configured in a comfort assembly installed within a seat cushion or seat back. The bladders may inflate and deflate to provide a massage effect.

### BRIEF DESCRIPTION OF THE DRAWINGS

Figure 1 is a perspective view of an example seat.
Figure 2 is a front view of a seat back with a trim cover removed to show an example of a comfort assembly.
Figure 3 illustrates an example valve.
Figure 4 illustrates a cross sectional view of the example valve of Figure 3.
Figure 5 illustrates the example valve in a closed position.
Figure 6 illustrates a cross-sectional view of the example valve in the close position.
Figure 7 illustrates another example valve.
Figure 8 illustrates another example valve.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundaryless terms, and should be interpreted consistent with the way one skilled in the art would interpret those terms.

This disclosure relates to a fluid system that is comprised of one or more primary fluid bladders in fluid communication with a fluid supply and one or more secondary fluid bladders in fluid communication with one of the primary fluid bladders to provide a massaging effect.

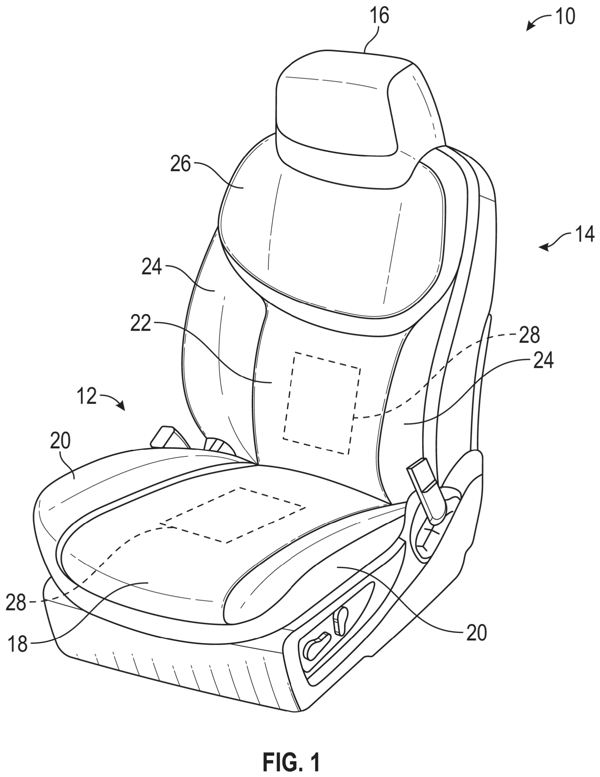

Figure 1 illustrates a seat assembly 10 according to one example embodiment. The seat assembly 10 may be utilized as a vehicle seat assembly 10 for seating in a vehicle, such as an automobile, an aircraft, a watercraft, or any other seating environment. The seat assembly 10 includes a seat bottom 12, which may be adapted to be mounted for motor-driven adjustable translation in a fore and aft direction and in an up and down direction of a vehicle. The seat assembly 10 includes a seat back 14, which may be pivotally connected to the seat bottom 12 to extend generally upright relative to the seat bottom 12 for pivotal adjustment relative to the seat bottom 12. A head restraint 16 may also be mounted to the seat back 14.

The seat bottom 12 may include a central seating surface 18 and a seating surface along a pair of side bolster regions 20 laterally spaced about the central seating surface 18. The seat back 14 may include a pelvic/lumbar seating surface 22 with a pair of laterally spaced apart side bolster regions 24 on either side. A thoracic/shoulder seating surface 26 is provided above the pelvic/lumbar seating surface 22 and the seating surface of seat back side bolster regions 24. It should be understood that this is just one example of a seat configuration, and that other configurations could also be utilized.

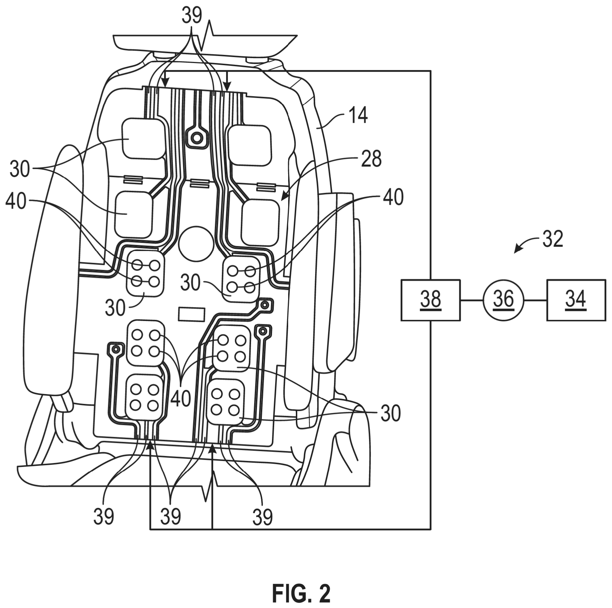

In implementations, the seat assembly 10 may include one or more comfort assemblies 28 (Figure 2) installed within the seat bottom 12 and/or the seat back 14. In implementations, a comfort assembly 28 is configured to provide a massage effect with pulsing movement that is transferred through the seat bottom 12 or seat back 14 to an associated portion of a seated occupant.

In implementations, the comfort assembly 28 includes one or more primary fluid bladders 30 that are selectively inflatable via an actuator assembly 32, which is schematically shown in Figure 2. In implementations, the primary fluid bladders 30 may include discrete inflatable/deflatable pouches or cells, and the actuator assembly 32 controls inflation and/or deflation of the primary bladder assemblies 30 via one or more controllers 34. The actuator assembly 32 may include a fluid supply source 36 that is connected to a valve assembly 38 to provide a source of fluid to the fluid bladders 30. In one example, the valve assembly 38 may comprise any type of valve assembly suitable for controlling flow from the fluid supply source 36 to the bladders 30, and the valve assembly 38 may comprise a single valve or multiple valves as needed. In implementations, the fluid supply source 36 may comprise one or more of a compressor, fan, air pump, blower, pump and pneumatic pump, for example.

In implementations, the valve assembly 38 directs fluid into one or more fluid paths 39 that are associated with the bladders 30. The fluid paths 39 may be formed as tubes or conduits, for example.

In implementations, the one or more controllers 34 regulate compressed air into and out of the primary bladders 30 in the seat assembly 10. The controller 34 and actuator 32 may be installed in the seat back 14, under the seat bottom 12, or anywhere suitable in the vehicle.

The one or more controllers 34 may include a processing unit and non-transitory memory for executing various control strategies. The processing unit can be a custom made or commercially available processor, a central processing unit (CPU), or generally any device for executing software instructions. The memory can include any one or combination of volatile memory elements and/or nonvolatile memory elements. The processing unit can be programmed to execute one or more programs stored in the memory. The programs may be stored in the memory as software code, for example. The programs stored in the memory may include one or more additional or separate programs, each of which includes an ordered list of executable instructions for implementing logical functions associated with controlling the valve assembly. While shown as a single controller, each controller 34 may be comprised of one or more controllers. The controller 34 may also be in communication with, and responsive to instructions from, another controller. Those skilled in the art who have the benefit of this description will be able to determine how to configure the one or more controllers 34 for the valve inflation purposes set forth below.

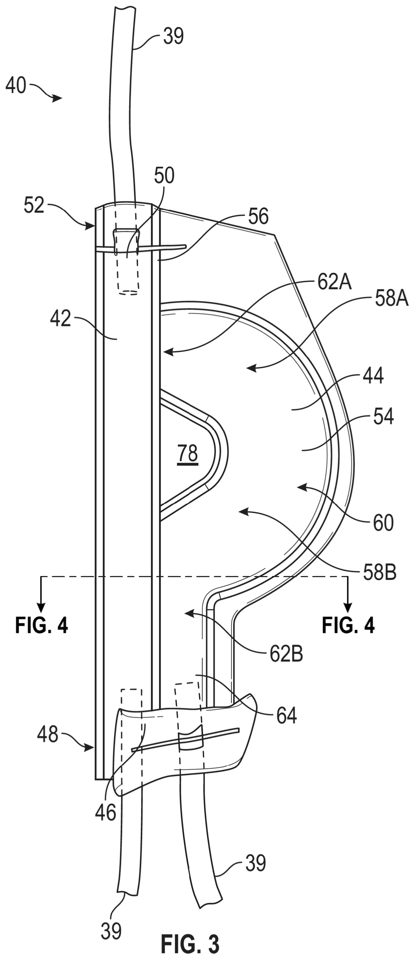

Figure 3 illustrates an example valve 40, which may be included in the valve assembly 38 or a similar valve assembly, for example. The example valve 40 includes a passage 42 and a cavity 44 adjacent the passage 42. In implementations, the passage 42 may be a substantially straight passage with an inlet 46 at a first end 48 and an outlet 50 at a second end 52 opposite the first end 48. In other examples, an inlet 46 may be at the second end 52, and the outlet 50 at the first end 48. In implementations, the valve 40 may be may be installed in the seat back 14, under the seat bottom 12, or anywhere suitable in the vehicle.

The cavity 44 may include a concave portion 54 that is concave relative to the passage 42. In implementations, the concave portion 54 may be U-shaped, C-shaped V-shaped, semicircular, and/or curved. In implementations, the passage 42 is straighter than the concave portion 54, though the passage 42 may include slight curves or bends in some implementations to facilitate fluid flow or fit within space constraints. The passage 42 and the cavity 44 may be bound by boundaries 56. The passage 42 and the cavity 44 may be fluidly separated from one another at boundaries 56. The boundaries 56 may form a fluid-tight separation between the passage 42 and the cavity 44. The boundaries 56 of the passage 42 may extend longitudinally and provide lateral boundaries. The concave portion 54 may include arms 58A, 58B extending from a base portion 60 to first and second ends 62A, 62B of the arms 58A, 58B, with the first and second ends 62A, 62B being closer to the passage 42 than the base portion 60 is close to the passage 42. The passage 42 and the end 62A may share a boundary 56. The passage 42 and the cavity 44 may together form a P-shape. The boundaries 56 of the concave portion 54 may be concave in shape as shown and may extend to the boundaries 56 of the passage 42.

The cavity 44 may include a stem 64 extending from the concave portion 54. The stem 64 may be substantially parallel to the passage 42. The stem 64 is fluidly separate from the passage 42 by one or more boundaries 56 therebetween. The stem 64 and the passage 42 may share a boundary 56 as shown. The cavity 44 may include a first cavity end 66, a second cavity end 68, a cavity inlet 70 at the first cavity end 66, and a cavity outlet 72 at the first cavity end 66. The first cavity end 66 may be in the stem 64. Other inlet and outlet configurations may be utilized. Various fluid paths 39 may be received at the inlets and outlets described herein, such as being received between the layers 74, 76 (described below) in some examples.

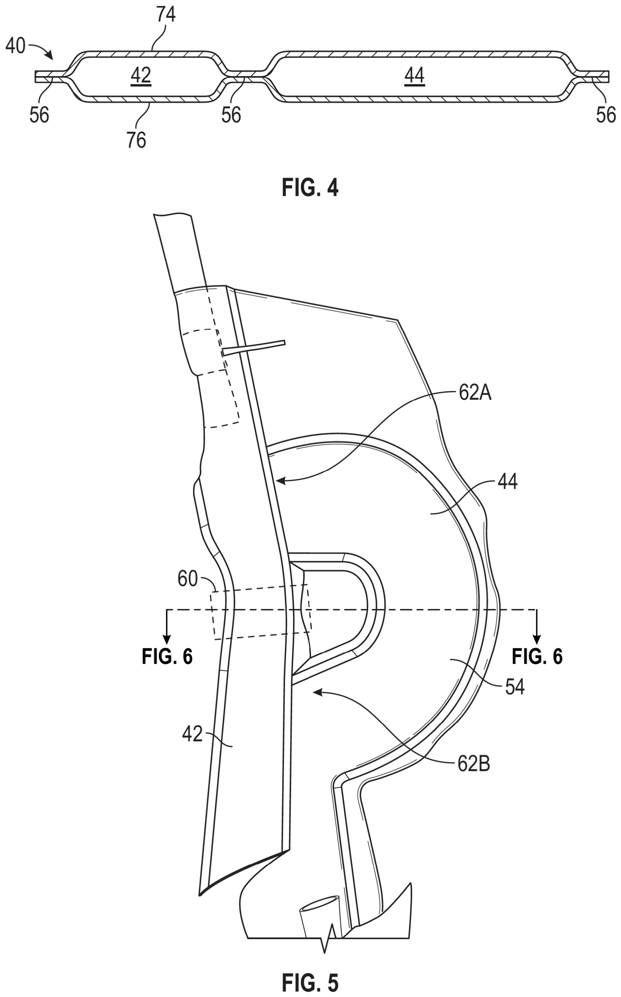

Figure 4 illustrates a cross section through the example valve 40 of Figure 3. The valve includes a first layer 74 and a second layer 76 joined to form the passage 42 and the cavity 44. In implementations, the first layer 74 and second layer 76 may be flexible sheets, and the cavity 44 and the passage 42 are provided between the first layer 74 and second layer 76. In implementations, the first layer 74 and second layer 76 are first and second thermoplastic polyurethane (TPU) sheets, and the cavity 44 and the passage 42 are provided between the first and second thermoplastic polyurethane sheets. Other materials may be utilized.

In implementations, the boundaries 56 are formed by joining together the first layer and the second layer. In implementations, the boundaries 56 are formed by laser welding together the first layer 74 and the second layer 76. In implementations, the boundaries may be formed in a single weld process step, resulting in increased efficiency and decreased fabrication time. In implementations, laser welding may have the added benefit of keeping the layers substantially flat. High frequency welding, heat bonding, adhesive bonding, or lamination may be utilized in other implementations. The boundaries 56 and the inner surfaces of the layers 74, 76 may enclose the passage 42 and cavity 44 as shown.

Referring back to Figure 3, an opening 78 may be provided through the first layer 74 and the second layer 76 circumscribed by the concave portion 54 and the passage 42. In implementations, the opening 78 may provide improved shutoff performance (described below) of the cavity 44 and passage 44. In implementations, the passage 42 has a first width w1, and the cavity 44 has a second width w2 greater than the first width w1. The widths w1 and w2 may be adjacent the opening 78, although similar configurations without an opening 78 may also be utilized. Applicant has found that this arrangement may provide improved shutoff performance (described further below) of the cavity 44 in some implementations. However, other width relationships would also benefit from this disclosure. The widths w1 and w2 may be co-planar. The cavity 44 may have a greater volume than the passage 42.

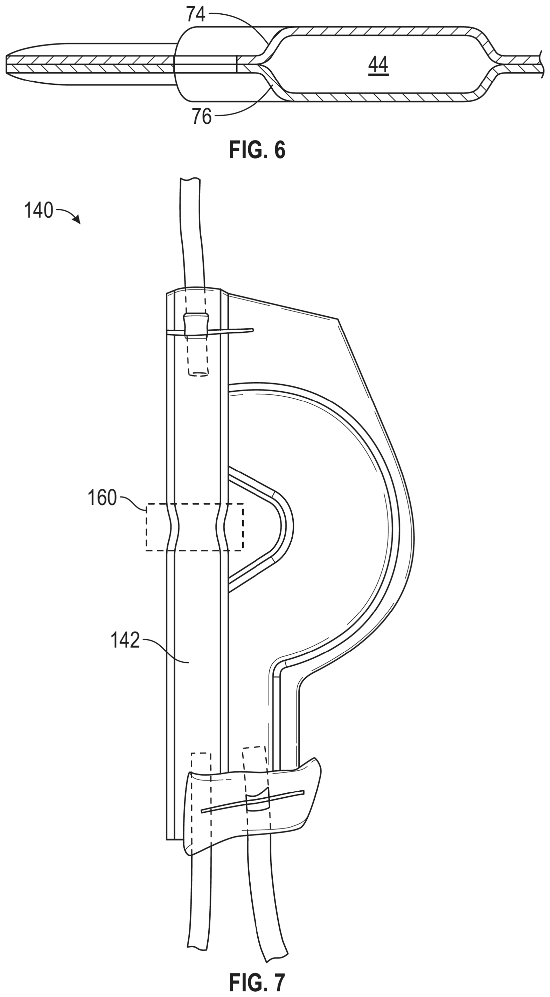

Figures 5 and 6 illustrate the example valve 40 in a closed position. The cavity 44 may be inflated, such as to a substantially full position, causing the inner surfaces of the layers 74 and 76 to contact one another (e.g., at a bend) to restrict airflow through the passage 42. The closed position shown may prevent fluid from flowing from the inlet 46 to the outlet 50 due to the blockage where the layers 74, 76 are in contact because of inflation of the cavity 44. The contact may be induced in a region 80 of the passage 42 longitudinally between the ends 62A, 62B. The passage 42 may be tapered at the region 80, or the passage 42 may not have a taper in some implementations. The cavity 44 therefore may function as a shutoff valve to the passage 42 when receiving fluid. The inflation of the cavity 44 may cause a bend in the passage 42 such that the passage 42 is shaped similarly to the cavity 44. In implementations, when it is desired for the passage 42 to be closed or blocked, the controller 34 may control inflation of the cavity 44.

In implementations, the opening 78 may allow for increased flexibility in the layers of the passage 42 for creating the blockage, facilitating the movement needed to achieve a blockage. The opening 78 may also accommodate expansion during inflation.

Figure 7 illustrates another example valve 140 substantially similar to the valve 40, except that the passage 142 is tapered at the region 160.

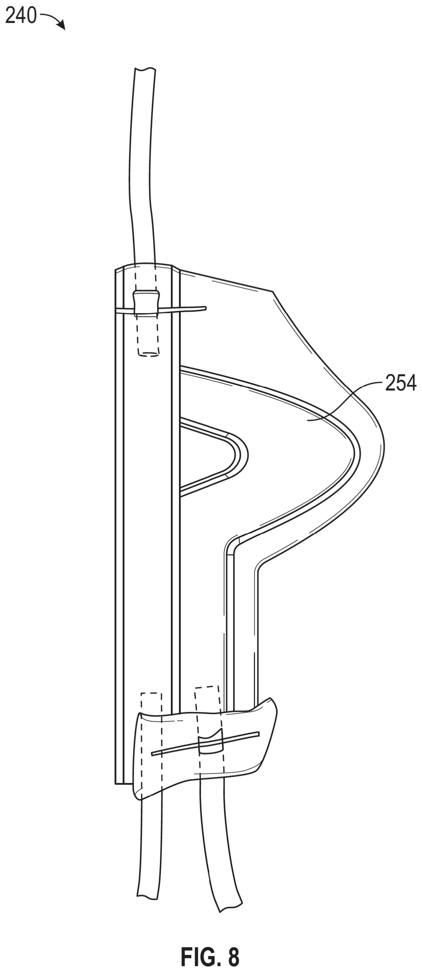

Figure 8 illustrates another example valve 240 substantially similar to the valve 40, except that the concave portion 254 is V-shaped.

A method in accordance with one or more of the examples valves disclosed herein may include closing a valve including a first layer and a second layer joined to form a passage and a cavity adjacent the passage, with the closing including inflating a concave portion of the cavity to induce contact between the first layer and the second layer in the passage.

The inflating may include introducing air into the cavity through an inlet until the cavity is at a substantially full position. The method may include opening the valve by deflating the concave portion.

In some aspects, the passage includes a passage inlet at a first passage end and a passage outlet at a second passage end opposite the first passage end, and the bend restricts flow from the passage inlet to the passage outlet.

An assembly according to one or more examples in this disclosure may be said to include a valve including a first layer and a second layer joined to form a passage and a cavity adjacent the passage, wherein the cavity includes a concave portion concave relative to the passage.

In implementations, the first layer and second layer are first and second thermoplastic polyurethane sheets, and the cavity and the passage are provided between the first and second thermoplastic polyurethane sheets. In implementations, the first layer and the second layer are laser welded together at boundaries of the cavity and the passage.

In implementations, the cavity includes a stem portion extending from the concave portion.

In implementations, the passage includes a passage inlet at a first passage end and a passage outlet at a second passage end opposite the first passage end, and the cavity includes a first cavity end, a second cavity end, a cavity inlet at the first cavity end, and a cavity outlet at the first cavity end.

In implementations, the passage has a first width, and the cavity has a second width greater than the first width.

In implementations, the passage and the cavity together form a P-shape.

In implementations, the assembly may include an opening through the first layer and the second layer circumscribed by the concave portion and the passage.

In implementations, the concave portion is U-shaped. In implementations, the concave portion is V-shaped.

In implementations, the first layer and second layer are first and second thermoplastic polyurethane sheets, the cavity and the passage are provided between the first and second thermoplastic polyurethane sheets, the first layer and the second layer are joined together at boundaries of the cavity and the passage, the passage includes a passage inlet at a first passage end and a passage outlet at a second passage end opposite the first passage end, and the cavity includes a first cavity end, a second cavity end, a cavity inlet at the first cavity end, and a cavity outlet at the first cavity end.

In some aspects, the techniques described herein relate to an assembly including: a vehicle seat; a plurality of bladders disposed within the vehicle seat; and a valve system modulating fluid flow to the plurality of bladders, the valve system including: a valve including a first layer and a second layer joined to form a passage and a cavity adjacent the passage, wherein the cavity includes a concave portion concave relative to the passage.

In implementations, the vehicle seat includes a seat back, and the valve is in the seat back.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An assembly, comprising:
a valve including a first layer and a second layer joined to form a passage and a cavity adjacent the passage, wherein the cavity includes a concave portion concave relative to the passage.

2. The assembly of claim 1, wherein the first layer and second layer are first and second thermoplastic polyurethane sheets, and the cavity and the passage are provided between the first and second thermoplastic polyurethane sheets,
wherein preferably the first layer and the second layer are laser welded together at boundaries of the cavity and the passage.

3. The assembly of any of the preceding claims, wherein the cavity includes a stem portion extending from the concave portion.

4. The assembly of any of the preceding claims, wherein:
the passage includes a passage inlet at a first passage end and a passage outlet at a second passage end opposite the first passage end, and
the cavity includes a first cavity end, a second cavity end, a cavity inlet at the first cavity end, and a cavity outlet at the first cavity end.

5. The assembly of any of the preceding claims, wherein the passage has a first width, and the cavity has a second width greater than the first width,
and/or wherein the passage and the cavity together form a P-shape.

6. The assembly of any of the preceding claims, comprising:
an opening through the first layer and the second layer circumscribed by the concave portion and the passage.

7. The assembly of any of the preceding claims, wherein the concave portion is U-shaped, or wherein the concave portion is V-shaped.

8. The assembly of any of the preceding claims, wherein:
the first layer and second layer are first and second thermoplastic polyurethane sheets, the cavity and the passage are provided between the first and second thermoplastic polyurethane sheets,
the first layer and the second layer are joined together at boundaries of the cavity and the passage,
the passage includes a passage inlet at a first passage end and a passage outlet at a second passage end opposite the first passage end, and
the cavity includes a first cavity end, a second cavity end, a cavity inlet at the first cavity end, and a cavity outlet at the first cavity end.

9. An assembly comprising:
a vehicle seat;
a plurality of bladders disposed within the vehicle seat; and
a valve system modulating fluid flow to the plurality of bladders, the valve system comprising:
a valve including a first layer and a second layer joined to form a passage and a cavity adjacent the passage, wherein the cavity includes a concave portion concave relative to the passage.

10. The assembly of claim 9, wherein the vehicle seat includes a seat back, and the valve is in the seat back.

11. The assembly of claim 9 or 10, wherein the first layer and second layer are first and second thermoplastic polyurethane sheets, and the cavity and the passage are provided between the first and second thermoplastic polyurethane sheets,
wherein preferably the first layer and the second layer are laser welded together at boundaries of the cavity and the passage.

12. The assembly of any of claims 9 to 11, wherein:
the passage includes a passage inlet at a first passage end and a passage outlet at a second passage end opposite the first passage end, and
the cavity includes a first cavity end, a second cavity end, a cavity inlet at the first cavity end, and a cavity outlet at the first cavity end.

13. A method, comprising:
closing a valve including a first layer and a second layer joined to form a passage and a cavity adjacent the passage, wherein the closing includes inflating a concave portion of the cavity resulting in a bend in the passage.

14. The method of claim 13, wherein the inflating includes introducing air into the cavity through an inlet until the cavity is at a substantially full position, the method preferably comprising opening the valve by deflating the concave portion.

15. The method of claim 13 or 14, wherein:
the passage includes a passage inlet at a first passage end and a passage outlet at a second passage end opposite the first passage end, and the bend restricts flow from the passage inlet to the passage outlet.
